# EUROPÄISCHE PATENTANMELDUNG

(11) **EP 1 498 019 A1**
(43) Veröffentlichungstag der Anmeldung: **19.01.2005**
(21) Anmeldenummer: 04016404.8
(22) Anmeldetag: 13.07.2004
(51) Int. Cl.: A01D 75/18, A01F 29/16, G01V 3/08

(54) **Erntemaschine mit einer Metalldetektionseinrichtung**

(30) Priorität: 17.07.2003 DE 10332395
(71) Anmelder: Maschinenfabrik Bernard Krone GmbH, 48480 Spelle (DE)
(72) Erfinder: Krone, Bernard, Dr.-Ing. E.h., 48480 Spell (DE); Horstmann, Josef, Dr.-Ing., 49479 Ibbenbüren (DE); Weiss, Peter, Dipl.-Ing., 48488 Listrup (DE); Johannsen, Sönke, Dipl.-Ing., 26655 Westerstede (DE)

(57) **Zusammenfassung**

Die Erfindung bezieht sich auf eine Erntemaschine zum Ernten und/oder Weiterverarbeiten von Erntegut mit einem eine Metalldetektionseinrichtung (12) zur Erkennung von metallischen Elementen in einem Überwachungsbereich eines Erntegutstromes umfassende Einzugsvorrichtung (6), wobei die Metalldetektionseinrichtung (12) Magnete zur Erzeugung eines Magnetfeldes umfasst, so dass in Abhängigkeit von elektrischen Signalen bei Detektion von Metallteilen im Emtegut mittels eines Steuersignals Antriebselemente der Einzugsvorrichtung (6) oder weiteren nachgeordneten Maschinenkomponenten schaltbar sind, wobei ein dem Magnetfeld in etwa gegenüberliegender rückwärtig direkt an die Metalldetektionseinrichtung (12) angrenzender Bereich bestimmten Ausmaßes frei von magnetisierbaren Materialien ist.

## Beschreibung

Die Erfindung bezieht sich auf eine Erntemaschine zum Ernten und/oder Weiterverarbeiten von Erntegut mit einem eine Metalldetektionseinrichtung zur Erkennung von metallischen Elementen in einem Überwachungsbereich eines Erntegutstromes umfassende Einzugsvorrichtung, wobei die Metalldetektionseinrichtung Magnete zur Erzeugung eines Magnetfeldes umfasst, so dass in Abhängigkeit von elektrischen Signalen bei Detektion von Metallteilen im Erntegut mittels eines Steuersignals Antriebselemente der Einzugsvorrichtung oder weiteren nachgeordneten Maschinenkomponenten schaltbar sind.
Derartige Metalldetektionseinrichtungen finden insbesondere in Feldhäckslern Verwendung, um zum einen Schäden am Förderer bzw. an der Häckseltrommel zu vermeiden und zum anderen Verletzungen der Tiere durch die Verfütterung von mit metallischen Teilen verunreinigtem Futter zu vermeiden.
Eine Erntemaschine der vorgenannten Art ist aus der DE 199 12 407 A1 bekannt. Diese Erntemaschine ist z. B. als Feldhäcksler ausgebildet mit einem Vorsatzgerät, um das Erntegut abzuschneiden, weiterzufördern und mittels Einzugswalzen und Presswalzen einer nachfolgenden Häckseleinrichtung zuzuführen. Um die bereits vorab beschriebenen möglichen Folgen einer Verunreinigung des Erntegutes durch Metallteile zu vermeiden, ist die Erntemaschine der vorgenannten Art mit einer Metalldetektionseinrichtung versehen, die in einer unteren Walze eines Einzugswalzenpaares vorgesehen ist. Dazu sind innerhalb der Walze Magnete angeordnet, deren Magnetfeld in Richtung der zugeordneten oberen Walze ausgerichtet ist, um den zwischen den Walzen befindlichen Emtegutstrom auf metallische Fremdkörper hin zu untersuchen. Auch an dieser Maschine sind wie bei fast allen Herstellern diese Einzugswalzen aus Funktions- und Verschleißgründen bevorzugterweise aus nicht magnetisierbaren Stahl hergestellt. In der Praxis hat sich jedoch gezeigt, dass nicht nur zu den Magneten bewegte ferromagnetische Teile die Magnetfelder und damit die Empfindlichkeit und Erkennungsgenauigkeit einer Metalldetektionseinrichtung beeinflussen. Tests haben ergeben, dass auch außerhalb des Magnetfeldes der Metalldetektionseinrichtung aber dieser direkt angrenzend angeordnete Befestigungselemente aus ferromagnetischem Material Störsignale verursachen.

Es ist daher Aufgabe der vorliegenden Erfindung, eine Erntemaschine der eingangs genannten Art zur Verfügung zu stellen, bei der die schwer zu erfassenden Störsignale der Metalldetektionseinrichtung weitgehendst vermieden werden und so eine sichere Metalldetektion gegeben ist.

Zur Lösung dieser Aufgabe zeichnet sich die Erntemaschine der eingangs genannten Art dadurch aus, dass sämtliche die Metalldetektionseinrichtung direkt befestigenden Elemente aus nicht magnetisierbaren Material bestehen.
Als nicht magnetisierbares Material kommt insbesondere austenitischer Stahl, und als nicht ferromagnetisches Material ein nicht ferromagnetisches Metall, wie Aluminium oder Messing, oder Kunststoff in Frage.
Zur lösbaren Befestigung der Metalldetektionseinrichtung an ein feststehendes Bauteil der Erntemaschine sind in den erfindungsgemäßen Ausführungsformen in der Regel Distanzstücke und Schrauben die betroffenen Befestigungselemente aus nicht magnetisierbaren Material.

Die vorliegende Erfindung ist an einer Vielzahl von Einrichtungen mit durch Metalldetektoren zu schützenden Bauteilen verwendbar. Sie kann insbesondere an selbstfahrenden oder gezogenen Erntemaschinen, wie Feldhäckslern benutzt werden.

Weitere Vorteile und Einzelheiten der Erfindung ergeben sich aus den Unteransprüchen und der nachfolgenden Beschreibung einer in den Zeichnungen dargestellten bevorzugten Ausführungsform der Erfindung; es zeigt:
**Fig. 1** eine Seitenansicht eines selbstfahrenden, eine Häckselvorrichtung nach der Erfindung umfassenden Feldhäckslers,
**Fig. 2** eine abgebrochene, teilweise geschnittene schematische Darstellung eines die Häckselvorrichtung einschließenden Teils des Feldhäckslers,
**Fig. 3** eine Schnittdarstellung der unteren Einzugswalze mit innenliegender Metalldetektionseinrichtung.

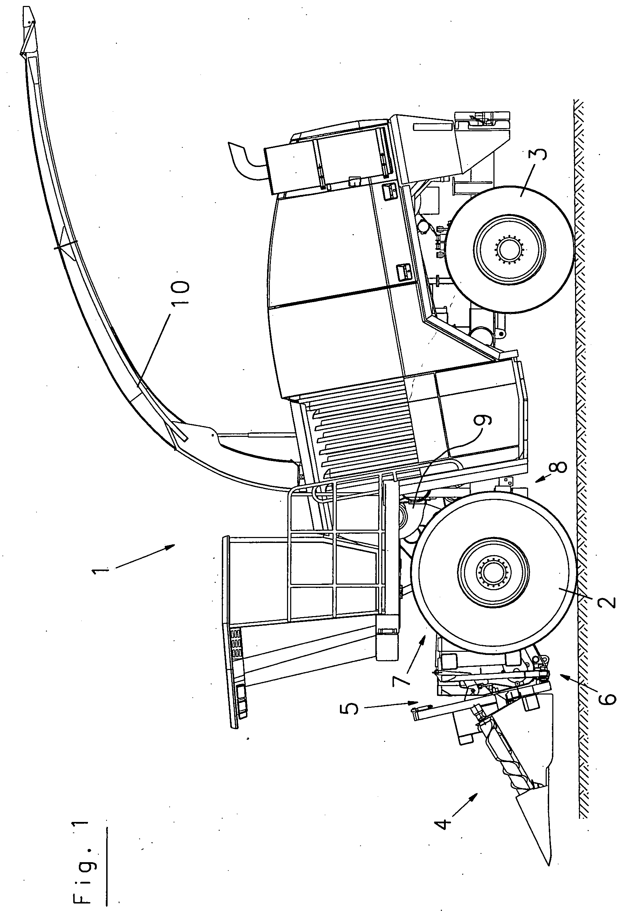

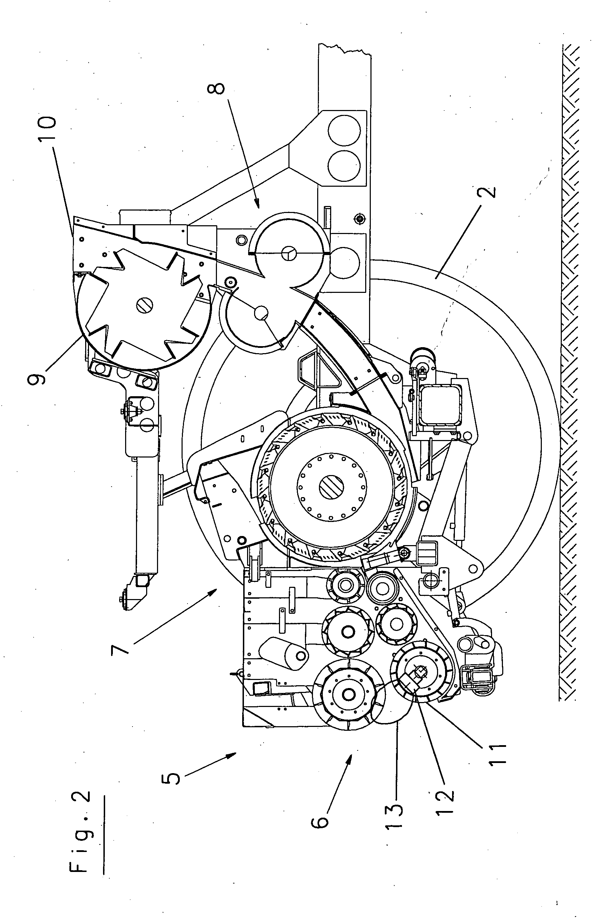

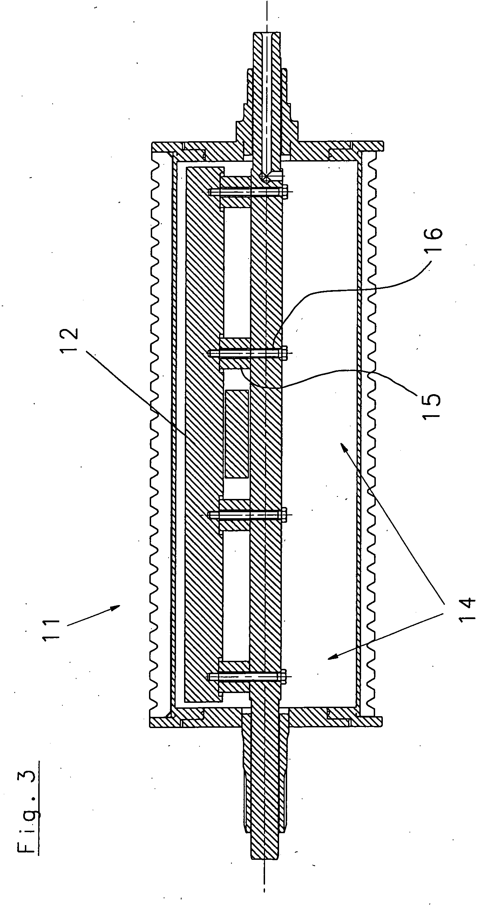

Der in Fig. 1 veranschaulichte selbstfahrende, sich über Antriebs- und über Lenkräder 2, 3 auf dem Boden abstützende Feldhäcksler 1 ist eine Erntemaschine zum Aufnehmen und Häckseln von Erntegut wie Mais, Grüngut oder dergleichen. Für den jeweiligen Erntevorgang trägt der Feldhäcksler 1 frontseitig ein Vorsatzgerät 4, beispielsweise ein Maisgebiss, das an einer Adaptervorrichtung 5 angebracht ist, an die sich eine Einzugsvorrichtung 6 mit nachfolgender Häckselvorrichtung 7 anschließt. Aus der Häckselvorrichtung 7 gelangt das Häckselgut durch einen Übergangsschacht zu einem Com-Cracker 8, wonach es durch ein Wurfgebläse 9 über einen Auswurfkrümmer 10 ausgeworfen wird.
Dieser in Fig. 2 gut nachzuvollziehende Gutfluss veranschaulicht sehr gut welche Baugruppen durch die Aufnahme von metallischen Fremdkörpern geschädigt werden können.
Am Anfang der Einzugsvorrichtung 6 ist die untere Einzugswalze 11 des ersten Einzugswalzenpaares mit der Metalldetektionseinrichtung 12 ausgerüstet. Die Metalldetektionseinrichtung 12 ist dabei innerhalb der unteren Einzugswalze 11 derart feststehend angeordnet und ausgerichtet, dass das Magnetfeld 13 der Metalldetektionseinrichtung 12 den gesamten Einführungsbereich zwischen dem ersten Einzugswalzenpaar der Einzugsvorrichtung 6 in Richtung des Vorsatzgerätes 4 hin ausgerichtet abdeckt. Diese Ausrichtung des Magnetfeldes 13 ist besonders vorteilhaft, weil dadurch auch bei schnelleren Zuführgeschwindigkeiten des Erntegutes noch eine sichere Metalldetektion mit anschließender Betätigung von Sicherheitseinrichtungen gegeben ist. Die in Fig. 3 im einzelnen erkennbaren erfindungsgemäßen Befestigungselemente 14 der Metalldetektionseinrichtung 12 umfassen in diesem Ausführungsbeispiel Distanzstücke 15 und Schrauben 16 aus nicht magnetisierbaren Material.
Die in diesem Ausführungsbeispiel gewählte Befestigungsart mit Befestigungselementen 14 aus austenitischem Stahl ist auch in vielen anderen Ausführungsformen mit nicht magnetisierbaren Materialien ausführbar.

## Patentansprüche

1. Erntemaschine zum Ernten und/oder Weiterverarbeiten von Erntegut mit einem eine Metalldetektionseinrichtung (12) zur Erkennung von metallischen Elementen in einem Überwachungsbereich eines Erntegutstromes umfassende Einzugsvorrichtung (6), wobei die Metalldetektionseinrichtung (12) Magnete zur Erzeugung eines Magnetfeldes (13) umfasst, so dass in Abhängigkeit von elektrischen Signalen bei Detektion von Metallteilen im Erntegut mittels eines Steuersignals Antriebselemente der Einzugsvorrichtung (6) oder weiteren nachgeordneten Maschinenkomponenten schaltbar sind, **dadurch gekennzeichnet, dass** ein dem Magnetfeld (13) in etwa gegenüberliegender rückwärtig direkt an die Metalldetektionseinrichtung (12) angrenzender Bereich bestimmten Ausmaßes frei von magnetisierbaren Materialien ist.

2. Erntemaschine nach Anspruch 1, **dadurch gekennzeichnet, dass** die Befestigungselemente (14) der Metalldetektionseinrichtung (12) aus einem nicht magnetisierbaren Material bestehen.

3. Erntemaschine nach einem der Ansprüche 1 oder 2, **dadurch gekennzeichnet, dass** die Metalldetektionseinrichtung (12) durch Schrauben (16) und Distanzstücke (15) aus nicht magnetisierbaren Material befestigt ist.

4. Erntemaschine nach einem der Ansprüche 1 bis 3, **dadurch gekennzeichnet, dass** die Befestigungselemente (14) der Metalldetektionseinrichtung (12) aus Kunststoff bestehen.

5. Erntemaschine nach einem der Ansprüche 1 bis 4, **dadurch gekennzeichnet, dass** die Befestigungselemente (14) der Metalldetektionseinrichtung (12) aus nicht ferromagnetischen Metallen bestehen.

6. Erntemaschine nach einem der Ansprüche 1 bis 5, **dadurch gekennzeichnet, dass** die Befestigung der Metalldetektionseinrichtung (12) an feststehende Bauteile der Erntemaschine durch eine formschlüssige Verbindung mit nicht magnetisierbaren Materialien erfolgt.

7. Erntemaschine nach einem der Ansprüche 1 bis 6, **dadurch gekennzeichnet, dass** der Mindestabstand von magnetisierbaren Materialien zur Metalldetektionseinrichtung (12) innerhalb eines Bereiches auf der dem Magnetfeld (13) gegenüberliegenden Seite der Metalldetektionseinrichtung (12) mindestens 35 mm beträgt.
